# FASCICULE DE BREVET EUROPEEN

(11) **EP 1 397 263 B1**
(45) Date de publication et mention de la délivrance du brevet: **07.12.2005**
(21) Numéro de dépôt: 02740616.4
(22) Date de dépôt: 17.05.2002
(51) Int. Cl.: B60C 9/09, B60C 9/07, B29D 30/20, B60C 15/06

(54) **PNEUMATIQUE A BOURRELET RENFORCE**
REIFEN MIT VERSTÄRKTER WULST
TYRE WITH REINFORCED BEAD

(30) Priorité: 31.05.2001 FR 0107202
(43) Date de publication de la demande: 17.03.2004
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: BESTGEN, Luc, F-63140 Chatel-Guyon (FR); AHOUANTO, Michel, F-63530 Enval (FR)
(74) Mandataire: Diernaz, Christian
(86) Numéro de dépôt international: PCT/EP2002/005481
(87) Numéro de publication internationale: WO 2002/096675

(56) Documents cités:
- DE-A- 2 164 366
- US-A- 3 062 259
- US-A- 3 934 634
- PATENT ABSTRACTS OF JAPAN vol. 014, no. 384 (M-1013), 20 août 1990 (1990-08-20) & JP 02 144201 A (SUMITOMO RUBBER IND LTD), 4 juin 1990 (1990-06-04)

## Description

L'invention concerne un pneumatique à armature de carcasse comprenant des éléments de renforcement en grande partie radiaux, armature de carcasse surmontée d'une armature de sommet formée plus particulièrement d'éléments de renforcement textiles, et ledit pneumatique étant particulièrement destiné à l'équipement des véhicules de tourisme.

Bien que présentant de nombreux avantages et en particulier celui d'être très léger, un tel pneumatique n'est pas sans inconvénients : il ne présente pas une endurance suffisante à grande vitesse, endurance évaluée par deux performances que sont la vitesse maximale (ou vitesse limite) atteinte par le pneumatique en roulage sous des conditions normales, et l'endurance proprement dite à grande vitesse néanmoins inférieure à la vitesse limite ci-dessus. Une armature de sommet par exemple formée de deux nappes de sommet croisées en polyamide aromatique et d'une nappe de câbles circonférentiels en polyamide aliphatique ne permet pas d'atteindre une vitesse supérieure à 250 km/h, parce que les nappes de sommet croisées présentent certaines faiblesses à grande vitesse.

De nombreuses modifications peuvent être apportées à l'architecture d'une telle armature de sommet, par exemple le retournement d'au moins une nappe de sommet de travail. De même, le choix des matériaux utilisés pour la constitution de ladite armature est un facteur important en fonction du compromis de propriétés que l'on veut obtenir : un sommet constitué exclusivement d'éléments de renforcement en rayonne ne confère pas au pneumatique les rigidités nécessaires et en particulier dans le sens transversal ; un sommet constitué exclusivement d'éléments en polyamide aromatique entraîne une fabrication difficile et onéreuse du fait du manque de potentiel de conformation additionnelle ; de même, une armature composée exclusivement d'éléments de renforcement en polyamide aliphatique exige un trop grand nombre de nappes de sommet d'où un poids prohibitif.

Les études de la structure des câbles de tels matériaux (nombre de fils élémentaires, nombre de torons, torsions ....... etc .......) n'ont pas encore permis d'obtenir des résultats jugés satisfaisants. La demanderesse a entrepris des études afin de trouver des solutions au problème posé dans la constitution des bourrelets de pneumatique.

Le brevet GB 1 072 305 de la demanderesse, en vue de minimiser l'écartement de câbles radiaux de l'armature de carcasse les uns des autres et de la mise en tension du mélange caoutchouteux entre câbles préconise l'adjonction à la (aux) nappe(s) de fils ou câbles radiaux d'au moins une nappe de câbles non radiaux disposée entre le bourrelet et la bande de roulement, l'angle aigu formé entre un câble incliné de ladite nappe et un câble radial de la nappe de carcasse pouvant être compris entre 30° et 70° et la somme des résistances au centimètre des nappes de câbles inclinés étant au plus égale à la moitié de la somme des résistances au centimètre des câbles radiaux.

Le brevet US 3 480 065, en vue d'améliorer la stabilité de trajectoire du véhicule équipé soumis à des sollicitations latérales, tout en conservant un pneumatique confortable, enseigne de disposer dans les flancs, entre les tringles et les régions des flancs où la largeur axiale du pneumatique est maximale, des nappes de fils ou câbles élastiques inclinés et croisés, entre la partie principale et le retournement d'armature de carcasse, les dits câbles inclinés faisant avec les câbles radiaux un angle compris entre 45° et 75° .

Dans le cas d'engins de manutention et afin d'éviter les phénomènes d'instabilité (roulis, balancement, tangage), le brevet EP 0 301 093 A enseigne de disposer sur toute la hauteur des flancs axialement de part et d'autre de l'armature de carcasse une nappe de fils ou câbles orientés par rapport à la direction circonférentielle avec un angle faible.

Le brevet US 5 415 216, concernant des pneumatiques de hautes performances pour des véhicules de tourisme, et en vu d'obtenir un allègement des dits pneumatiques de faible rapport de forme, sans nuire à leurs qualités directionnelles, propose de supprimer l'utilisation des profilés triangulaires habituellement situés radialement au-dessus des tringles d'ancrage d'armature de carcasse et de disposer dans chaque flanc, de part et d'autre de la partie principale d'armature de carcasse, une nappe d'éléments de renforcement inclinés avec un angle compris entre 15° et 75° par rapport à la direction radiale, les dits éléments de renforcement pouvant être en matériau usuellement employé en pneumatique : polyamide aromatique ou aliphatique, polyester, métal, fibre de verre.....etc....

Le brevet US 306 22 59 A décrit un pneumatique correspondant au préambule de la revendication 1.

Les documents cités ci-dessus associent une armature de carcasse radiale de tringle à tringle à au moins une nappe d'éléments inclinés dans la zone du bourrelet. Afin de résoudre le problème à la base de l'invention, il est proposé d'associer, dans chaque zone de bourrelet, au moins deux nappes de renforcement d'éléments de renforcement inclinés par rapport à la direction circonférentielle à au moins une nappe d'armature de carcasse dont les éléments de renforcement sont inclinés dans ladite zone de bourrelet et radiaux entre les extrémités radialement à l'extérieur des deux nappes de renforcement de chaque bourrelet.

L'invention propose un pneumatique selon la revendication 1 et des procédés de fabrication selon les revendications 6 et 7.

Aussi, le pneumatique conforme à l'invention, comprenant au moins une armature de carcasse formée d'au moins une nappe formée d'éléments de renforcement et ancrée dans chaque bourrelet à au moins un élément de renforcement circonférentiel (comme une tringle), chaque bourrelet étant renforcé par au moins deux nappes de renforcement formées d'éléments de renforcement inclinés par rapport à la direction circonférentielle d'un angle compris entre 10° et 30° et croisés d'une nappe à la suivante, ces nappes de renforcement étant axialement adjacentes à l'armature de carcasse, est caractérisé en ce que les éléments de renforcement d'au moins une nappe d'armature de carcasse, dans chaque partie axialement adjacente aux deux nappes de renforcement de bourrelet, sont inclinés par rapport à la direction circonférentielle d'un angle compris entre 50° et 80°, les mêmes éléments de renforcement étant radiaux dans la partie comprise entre les extrémités radialement à l'extérieur des dites deux nappes de renforcement, lesdites extrémités étant situées radialement à l'extérieur des points de flancs définissant la largeur axiale maximale du pneumatique monté gonflé sur sa jante nominale.

L'armature de carcasse est formée préférentiellement d'au moins une nappe comportant des éléments de renforcement textiles et avantageusement en polyester. Les éléments de renforcement constituant les deux nappes de renforcement de bourrelet sont préférentiellement faits du même matériau que celui employé pour les éléments de carcasse. Les angles que forment les éléments des deux nappes de renforcement de bourrelet, bien que pouvant être égaux en valeur absolue, sont préférentiellement inégaux pour permettre une fabrication plus aisée du pneumatique.

Par renforts radiaux, il faut entendre ici que chaque renfort fait un angle compris entre 80° et 110° avec la direction circonférentielle. Par adjacente, on entend qu'au moins une nappe de renforcement de bourrelet est en contact avec la nappe de carcasse.

Avantageusement, la nappe de carcasse est insérée entre les nappes de renforcement de bourrelet et dans la partie située entre lesdites nappes de renforcement les renforts de ladite nappe de carcasse forme avec la direction circonférentielle un angle compris entre 50° et 80°.

Les pneumatiques de tourisme de grande dimension (c'est-à-dire 205/60 R 16 et au-delà) ont généralement une armature de carcasse composée de deux nappes d'éléments de renforcement radiaux ; pour de telles dimensions, un pneumatique conforme à l'invention peut alors être pourvu de trois nappes de renforcement de bourrelet, les nappes de carcasse étant insérées en totalité ou en partie axialement entre les nappes de renforcement.

Le brevet US 3 934 634 A décrit un procédé de fabrication d'un pneumatique comprenant une nappe de carcasse ayant ses renforts non radiaux dans la partie renforcée par une nappe de renforcement à renforts inclinés. Selon ce document, on pose une nappe de carcasse de câbles radiaux puis on dispose sur cette nappe de carcasse une nappe de renforcement, ensuite on met en place une tringle avant de procéder au retournement de la nappe de carcasse autour de la tringle et enfin on transforme cet ensemble sous la forme d'un tore. Dans cette opération, les renforts de carcasse adoptent un angle différent de 90° dans la région en vis-à-vis de la nappe de renforcement.

Les caractéristiques et avantages de l'invention seront mieux compris à l'aide de la description qui suit, illustrée par le dessin annexé sur lequel :

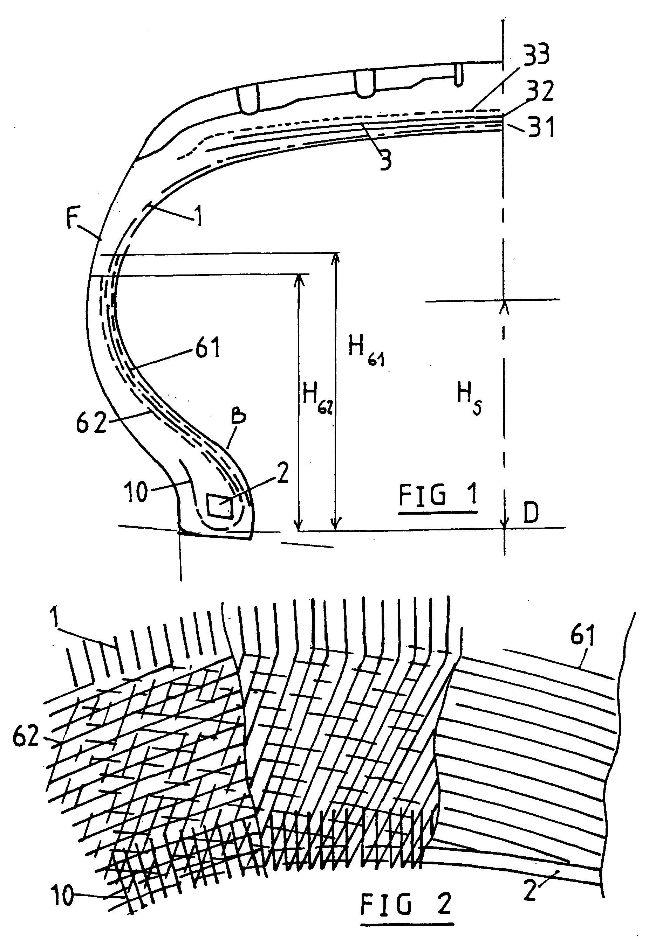

- la figure 1 représente schématiquement, vu en section méridienne, un pneumatique de tourisme conforme à l'invention,
- la figure 2 représente schématiquement, vu de profil, le même pneumatique.

Le pneumatique P, de dimension 175/70 R 13, comporte une armature de carcasse composée, dans le cas étudié, d'une seule nappe de carcasse 1, formée d'éléments de renforcement en polyester. Cette nappe de carcasse 1 est, dans chaque bourrelet, ancrée à une tringle 2, de constitution usuelle pour la dimension concernée, pour former un retournement 10. Elle est surmontée radialement à l'extérieur d'une armature de sommet 3 de deux nappes de travail à bords libres, les dites nappes de travail 31,32 étant formées d'éléments de renforcement en polyamide aromatique, croisés d'une nappe 31 à la suivante 32 et inclinés par rapport à la direction circonférentielle d'un angle sensiblement égal à 25° (il est à noter que les angles des éléments formant les deux nappes de travail 31 et 32 peuvent être inégaux sans que cela nuise à l'invention). Une nappe de frettage 33 d'éléments de renforcement en polyamide aliphatique est disposée radialement à l'extérieur de la nappe 32 de travail, les câbles de ladite nappe de frettage 33 faisant avec la direction circonférentielle un angle égal à 0° ± 2,5°.

Les bourrelets B et les flancs F du pneumatique sont renforcés par deux nappes additionnelles 61 et 62 d'éléments de renforcement textiles, en polyester c'est-à-dire de même nature que le matériau des éléments de renfort de la nappe de carcasse, l'une des dites nappes additionnelle 61 étant située axialement à l'intérieur de la partie principale de la nappe de carcasse 1 (c'est-à-dire la partie non retournée 10) et l'autre nappe additionnelle 62 étant située axialement à l'extérieur. Les câbles des nappes additionnelles font avec la direction circonférentielle des angles respectivement égaux à +15° et à -15°, ces angles étant mesurés au niveau des bords radialement intérieurs des nappes 61 et 62, bords localisés radialement au voisinage de la tringle d'ancrage 2.

Quant aux extrémités radialement extérieures des nappes de renforcement 61 et 62, elles sont, vues en coupe, situées respectivement à des distances H61 et H62 de la base D des bourrelets (la base D étant une droite parallèle à l'axe de rotation passant par le point d'intersection entre la génératrice du siège de bourrelet et la génératrice de la paroi verticale dudit bourrelet) égales respectivement à 82 mm et 76 mm, distances qui sont supérieures à la distance HS qui sépare le point du pneumatique de plus grande largeur axiale de la base D.

Les renforts de la nappe de carcasse 1 font avec la direction circonférentielle un angle moyen de -65° dans la partie insérée axialement entre les deux nappes de renforcement 61 et 62, tandis que les mêmes renforts font un angle de 90° dans la la partie restante (c'est-à-dire radialement à l'extérieur des extrémités radialement à l'extérieur des nappes de renforcement de bourrelet).

Les variations angulaires des câbles de la nappe de carcasse 1 ainsi que les variations angulaires entre les nappes de renforcement 61 et 62 peuvent être obtenues par un procédé simple de fabrication de l'ébauche cylindrique non vulcanisée de la nappe de carcasse. Les étapes de ce procédé sont les suivantes :
- pose sur un tambour de confection d'une couche de caoutchouc formant la couche interne suivie éventuellement par la pose de renforts, profilés nécessaires,
- pose d'une nappe de renforcement 61 comportant des renforts faisant avec la direction circonférentielle un angle inférieur à 30°,
- pose d'une nappe de carcasse 1 de câbles radiaux (angle égal ou proche de 90°), en prenant soin d'assurer un bon contact et une forte adhésion à cru entre la nappe de carcasse 1 et la nappe de renforcement 61 (par exemple en appliquant une pression appropriée par rouletage),
- pose d'un intercalaire sur la nappe de carcasse 1 suivie de la pose d'une nappe de renforcement 62, ledit intercalaire ayant pour effet d'empêcher le contact et l'adhésion entre la nappe de carcasse 1 et la nappe de renforcement 62 qui est posée sur ledit intercalaire,
- pose d'une tringle 2 et des profilés de caoutchouc nécessaires dans le pneumatique vulcanisé entre la nappe 62 et le retournement de la nappe de carcasse 1,
- retournement de la nappe de carcasse 1 autour de la tringle 2,
- finition de l'ébauche cylindrique de carcasse.

Cette ébauche est ensuite, comme connu en soi, conformée à un diamètre plus grand que le diamètre du tambour de pose pour devenir une ébauche torique de carcasse sur laquelle sont déposées des nappes formant le sommet du pneumatique. Au cours de la conformation, l'inclinaison des renforts de la nappe 61 de renforcement de bourrelet provoque une déradialisation des câbles de la nappe de carcasse 1 au moins sur la largeur axiale de pose de la nappe 61, ce qui conduit à une diminution de l'angle des câbles de nappe de carcasse, angle qui varie de 90° à -65°, alors que l'angle des câbles de la nappe 61 varie dans un intervalle de +15° à +10° et que les câbles de la nappe de renforcement 62 axialement extérieure à la nappe de carcasse 1 et désolidarisés de cette dernière suivent une modification voisine en triangulant avec le retournement de nappe de carcasse. Après conformation et finition de pose des éléments constitutifs du pneumatique à cru et après avoir enlevé l'intercalaire, il est ensuite procédé à la vulcanisation habituelle du pneumatique.

Non seulement, le pneumatique ainsi obtenu est léger du fait de l'emploi de matériau textile et permet de pallier largement aux insuffisances en vitesse limite et résistance à grande vitesse d'un pneumatique textile avec une nappe de renforcement de bourrelet usuelle, mais offre aussi la particularité de conserver une résistance au roulement au plus égale à celle dudit pneumatique sur toute la plage de vitesses utilisées et même de réduire la résistance au roulement à haute vitesse.

Ce même principe de construction d'une ébauche de carcasse de pneumatique peut être aisément appliqué au cas où les deux nappes de renforcement additionnelles de bourrelet sont adjacentes à la nappe de carcasse et toutes situées d'un même côté par rapport à ladite nappe de carcasse ; par exemple, en prévoyant la mise en place d'un intercalaire entre les nappes de renforcement additionnelles, tout en assurant un bon contact et une bonne adhésion à cru entre la nappe de carcasse et la nappe de renforcement la plus proche.

L'armature de sommet du pneumatique peut être métallique et composée en particulier de deux nappes de câbles inextensibles en acier, croisés d'une nappe à la suivante. L'invention présente alors l'énorme avantage de pouvoir supprimer la nappe de câbles circonférentiels en polyamide aliphatique sans pénaliser les résistance et endurance à grande vitesse et en permettant aussi de diminuer sensiblement le niveau du bruit extérieur émis par le pneumatique.

Il est précisé que les renforts des nappes additionnelles de bourrelet peuvent être de nature différentes (par exemple, une nappe est composée de renforts métalliques tandis que l'autre nappe est en renforts textiles).

## Revendications

1. Pneumatique comprenant au moins une armature de carcasse formée d'au moins une nappe (1) formée d'éléments de renforcement et ancrée dans chaque bourrelet B à au moins un élément de renforcement circonférentiel, par exemple une tringle (2), chaque bourrelet B étant renforcé par au moins deux nappes de renforcement (61, 62) formées d'éléments de renforcement inclinés par rapport à la direction circonférentielle d'un angle compris entre 10° et 30° et croisés d'une nappe à la suivante, ces nappes de renforcement (61, 62) étant axialement adjacentes à l'armature de carcasse, **caractérisé en ce que** les éléments de renforcement d'au moins une nappe d'armature de carcasse (1), dans chaque partie adjacente aux deux nappes de renforcement (61, 62) de bourrelet, sont inclinés par rapport à la direction circonférentielle d'un angle compris entre 50° et 80°, les mêmes éléments de renforcement étant radiaux dans la partie comprise entre les extrémités radialement supérieures des dites deux nappes de renforcement (61, 62), lesdites extrémités étant situées radialement à l'extérieur des points de flancs définissant la largeur axiale maximale du pneumatique monté gonflé sur sa jante nominale.

2. Pneumatique selon la revendication 1, **caractérisé en ce que**, dans au moins un bourrelet, la nappe d'armature de carcasse (1) passe entre les nappes de renforcement additionnelles (61, 62) de bourrelet.

3. Pneumatique selon la revendication 1 ou la revendication 2, **caractérisé en ce que** les éléments de renforcement de la nappe de carcasse 1 et des nappes de renforcement (61, 62) sont en matériau textile.

4. Pneumatique selon la revendication 3, **caractérisé en ce qu'**il comprend une armature de sommet (3) composée de plusieurs nappes de renforcement (31, 32, 33) dont les éléments de renforcement sont des câbles textiles.

5. Pneumatique selon l'une des revendications 1 à 4, **caractérisé en ce que** les nappes de renforcement (61, 62) sont formées d'éléments de renforcement croisés entre eux d'une nappe (61) à la suivante (62) en faisant des angles inégaux en valeur absolue.

6. Procédé de fabrication d'un pneumatique conforme à la revendication 2 et comprenant les étapes suivantes :
- - pose sur un tambour de confection d'une couche de caoutchouc formant la couche interne,
- pose d'une nappe de renforcement (61) comportant des renforts faisant avec la direction circonférentielle un angle inférieur à 30°
- pose d'une nappe de carcasse (1) de câbles radiaux faisant un angle égal ou proche de 90', en prenant soin d'assurer un bon contact et une forte adhésion à cru entre la nappe de carcasse (1) et la nappe de renforcement (61),
- pose d'un intercalaire sur la nappe de carcasse (1) suivie de la pose d'une nappe de renforcement (62) sur ledit intercalaire, l'intercalaire ayant pour effet d'empêcher le contact et l'adhésion entre la nappe de carcasse (1) et la nappe de renforcement (62),
- pose d'une tringle (2) et des profilés de caoutchouc nécessaires entre la nappe (62) et le retournement de la nappe de carcasse (1),
- retournement de la nappe de carcasse (1) autour de la tringle (2),
- finition de l'ébauche cylindrique de carcasse par conformation,
- enlèvement de l'intercalaire et achèvement de la confection du pneumatique cru,
- vulcanisation du pneumatique.

7. Procédé de fabrication d'un pneumatique conforme à la revendication 1 et comprenant les étapes suivantes :
- pose sur un tambour de confection d'une couche de caoutchouc formant la couche interne,
- pose d'une nappe de renforcement (62) formée d'éléments de renforcement inclinés par rapport à la direction circonférentielle d'un angle compris entre 10° et 30°,
- pose d'un intercalaire sur la nappe de nappe de renforcement (62), cet intercalaire ayant pour effet d'empêcher le contact et l'adhésion entre la nappe de renforcement (62) et une nappe de renforcement (61) posée sur ledit intercalaire, cette nappe de renforcement (61) comportant des renforts faisant avec la direction circonférentielle un angle compris entre 10° et 30°,
- pose sur la nappe de renforcement (61) d'une nappe de carcasse (1) à câbles radiaux faisant un angle égal ou proche de 90°, en prenant soin d'assurer un bon contact et une forte adhésion à cru entre la nappe de carcasse (1) et la nappe de renforcement (61),
- pose d'une tringle (2) et des profilés de caoutchouc nécessaires entre la nappe de carcasse (1) et le retournement de ladite nappe,
- retournement de la nappe de carcasse (1) autour de la tringle (2),
- finition de l'ébauche cylindrique de carcasse par conformation,
- enlèvement de l'intercalaire et achèvement de la confection du pneumatique cru,
- vulcanisation du pneumatique.

## Patentansprüche

1. Luftreifen, der mindestens eine Karkassenbewehrung aufweist, die aus mindestens einer Lage (1) besteht, die aus Verstärkungselementen gebildet wird und die im jedem Wulst B an mindestens einem umlaufenden Verstärkungselement, beispielsweise einem Wulstkern (2), verankert ist, wobei jeder Wulst B mit mindestens zwei Verstärkungslagen (61, 62) verstärkt ist, die aus Verstärkungselementen gebildet werden, die in Bezug auf die Umfangsrichtung in einem Winkel von 10 bis 30° geneigt und von einer Lage zur nächsten gekreuzt sind, wobei diese Verstärkungslagen (61, 62) axial an die Karkassenbewehrung angrenzen,
**dadurch gekennzeichnet, dass**
die Verstärkungselemente mindestens einer Karkassenbewehrungslage (1) in jedem Bereich angrenzend an die beiden Verstärkungslagen (61, 62) des Wulstes in Bezug auf die Umfangsrichtung in einem Winkel von 50 bis 80° geneigt sind, wobei diese Verstärkungselemente in dem Bereich zwischen den in radialer Richtung äußeren Enden der beiden Verstärkungslagen (61, 62) radial verlaufen, wobei sich diese Enden in Bezug auf die Punkte der Flanken radial außen befinden, die die maximale axiale Breite des aufgepumpten und auf seine zugehörige Felge montierten Luftreifens definieren.

2. Luftreifen nach Anspruch 1, **dadurch gekennzeichnet, dass** in mindestens einem Wulst die Lage der Karkassenbewehrung (1) zwischen den zusätzlichen Verstärkungslagen (61, 62) des Wulstes hindurchgeht.

3. Luftreifen nach Anspruch 1 oder nach Anspruch 2, **dadurch gekennzeichnet, dass** die Verstärkungselemente der Karkassenlage (1) und der Verstärkungslagen (61, 62) aus einem textilen Material bestehen.

4. Luftreifen nach Anspruch 3, **dadurch gekennzeichnet, dass** er eine Scheitelbewehrung (3) aufweist, die aus mehreren Verstärkungslagen (31, 32, 33) zusammengesetzt ist, deren Verstärkungselemente aus textilen Seilen bestehen.

5. Luftreifen nach einem der Ansprüche 1 bis 4, **dadurch gekennzeichnet, dass** die Verstärkungslagen (61, 62) aus von einer Lage (61) zur nächsten Lage (62) gekreuzten Verstärkungselementen gebildet werden, wobei sie Winkel bilden, die in ihrem Absolutwert nicht gleich sind.

6. Verfahren zur Herstellung eines Luftreifens nach Anspruch 2 mit den folgenden Schritten:
- Auflegen einer Kautschuklage, die die innere Lage bildet, auf eine Aufbautrommel,
- Auflegen einer Verstärkungslage (61), die Verstärkungen enthält, die mit der Umfangsrichtung einen Winkel unter 30° bilden,
- Auflegen einer Karkassenlage (1) aus radialen Seilen, die einen Winkel von 90° oder in der Nähe von 90° bilden, wobei darauf geachtet wird, dass zwischen der Karkassenlage (1) und der Verstärkungslage (61) ein guter Kontakt und eine hohe Adhäsion im Rohzustand sichergestellt sind,
- Auflegen einer Einlage auf die Karkassenlage (1) und anschließend Auflegen einer Verstärkungslage (62) auf die Einlage, wobei die Einlage dazu dient, den Kontakt und die Adhäsion der Karkassenlage (1) und der Verstärkungslage (62) zu verhindern,
- Setzen eines Wulstkerns (2) und Anbringen von erforderlichen Profilteilen aus Kautschuk zwischen der Lage (62) und dem Hochschlag der Karkassenlage (1),
- Hochschlagen der Karkassenlage (1) um den Wulstkern (2),
- Fertigstellung des zylindrischen Karkassenrohlings durch Konformation,
- Entfernen der Einlage und Fertigstellung der Herstellung des rohen Luftreifens,
- Vulkanisation des Luftreifens.

7. Verfahren zur Herstellung eines Luftreifens nach Anspruch 1 mit den folgenden Schritten:
- Auflegen einer Kautschuklage, die die innere Lage bildet, auf eine Aufbautrommel,
- Anbringen einer Verstärkungslage (62), die aus in Bezug auf die Umfangsrichtung in einem Winkel von 10 bis 30° geneigten Verstärkungselementen gebildet wird,
- Anbringen einer Einlage auf die Verstärkungslage (62), wobei die Einlage die Wirkung hat, den Kontakt und die Adhäsion der Verstärkungslage (62) und einer Verstärkungslage (61), die auf die Einlage aufgelegt wird, zu verhindern, wobei die Verstärkungslage (61) Verstärkungen enthält, die mit der Umfangsrichtung einen Winkel von 10 bis 30° bilden,
- Anbringen einer Karkassenlage (1) mit radialen Seilen, die einen Winkel von 90° oder in der Gegend von 90° bilden, auf die Verstärkungslage (61), wobei darauf geachtet wird, dass zwischen der Karkassenlage (1) und der Verstärkungslage (61) ein guter Kontakt und eine hohe Adhäsion im Rohzustand sichergestellt sind,
- Setzen eines Wulstkerns (2) und Anbringen der erforderlichen Profilteile aus Kautschuk, zwischen der Karkassenlage (1) und dem Hochschlag der Lage,
- Hochschlagen der Karkassenlage (1) um den Wulstkern (2),
- Fertigstellung des zylindrischen Karkassenrohlings durch Konformation,
- Entfernen der Einlage und Fertigstellung der Herstellung des rohen Luftreifens,
- Vulkanisation des Luftreifens.

## Claims

1. Tyre comprising at least one carcass reinforcement formed of at least one ply (1) formed of reinforcing elements and anchored in each bead B to at least one circumferential reinforcing element such as a bead wire (2), each bead B being reinforced by at least two reinforcement plies (61, 62) formed of reinforcing elements inclined relative to the circumferential direction at an angle between 10° and 30° and crossed from one ply to the next, the said reinforcement plies (61, 62) being axially adjacent to the carcass reinforcement, **characterised in that** the reinforcing elements of at least one carcass reinforcement ply (1), in each part adjacent to the two bead reinforcement plies (61, 62), are inclined relative to the circumferential direction at an angle between 50° and 80°, the same reinforcing elements being radial in the part located between the radially upper ends of the said reinforcement plies (61, 62), the said ends being located radially outside the sidewall points that define the maximum axial width of the tyre when fitted to its intended wheel rim and inflated.

2. Tyre according to Claim 1, **characterised in that** in at least one bead, the carcass reinforcement ply (1) passes between the additional bead reinforcement plies (61, 62).

3. Tyre according to Claims 1 or 2, **characterised in that** the reinforcing elements of the carcass ply (1) and of the reinforcement plies (61, 62) are made of textile material.

4. Tyre according to Claim 3, **characterised in that** it comprises a crown reinforcement (3) composed of several reinforcement plies (31, 32, 33) whose reinforcing elements are textile cables.

5. Tyre according to any of Claims 1 to 4, **characterised in that** the reinforcement plies (61, 62) are formed of reinforcing elements crossed over from one ply (61) to the next (62) at angles whose absolute values are unequal.

6. Process for the fabrication of a tyre according to Claim 1 and comprising the following stages:
- a rubber layer forming the internal layer is positioned on a building drum,
- a reinforcement ply (61) comprising reinforcements that make an angle smaller than 30° with the circumferential direction is positioned,
- a carcass ply (1) with radial cables making an angle equal or close to 90° is positioned, taking care to ensure good contact and strong adhesion in the uncured state between the carcass ply (1) and the reinforcement ply (61),
- an intermediate layer is positioned over the carcass ply (1) followed by the positioning of a reinforcement ply (62) over the said intermediate layer, the effect of the said intermediate layer being to prevent contact and adhesion between the carcass ply (1) and the reinforcement ply (62),
- a bead wire (2) and the necessary rubber profiled elements are positioned between the ply (62) and the turn-up of the carcass ply (1),
- the carcass ply (1) is turned up around the bead wire (2),
- the cylindrical carcass blank is finished by shaping,
- the intermediate layer is removed and the shaping of the unvulcanised tyre is completed,
- the tyre is vulcanised.

7. Process for the fabrication of a tyre according to Claim 1 and comprising the following stages:
- a rubber layer forming the internal layer is positioned on a building drum,
- a reinforcement ply (62) formed of reinforcing elements inclined at an angle between 10°and 30° relative to the circumferential direction is positioned,
- an intermediate layer is positioned over the reinforcement ply (62), the effect of the said intermediate layer being to prevent contact and adhesion between the reinforcement ply (62) and a reinforcement ply (61) positioned over the said intermediate layer, this reinforcement ply (61) comprising reinforcements that make an angle between 10°and 30° relative to the circumferential direction,
- a carcass ply (1) with radial cables making an angle equal or close to 90° is positioned over the reinforcement ply (61), taking care to ensure good contact and strong adhesion in the uncured state between the carcass ply (1) and the reinforcement ply (61),
- a bead wire (2) and the necessary rubber profiled elements are positioned between the carcass ply (1) and the turn-up of the said ply,
- the carcass ply (1) is turned up around the bead wire (2),
- the cylindrical carcass blank is finished by shaping,
- the intermediate layer is removed and the shaping of the unvulcanised tyre is completed,
- the tyre is vulcanised.
